# EUROPÄISCHE PATENTSCHRIFT

(11) **EP 2 481 991 B1**
(45) Veröffentlichungstag und Bekanntmachung des Hinweises auf die Patenterteilung: **06.07.2016**
(21) Anmeldenummer: 12000399.1
(22) Anmeldetag: 23.01.2012
(51) Int. Cl.: F28D 20/00, F24D 3/10

(54) **Sammler und Verteiler für eine Heiz- oder Kühlanlage**
Collector and distributor for a heating or cooling assembly
Collecteur et distributeur pour une installation de chauffage ou de refroidissement

(30) Priorität: 01.02.2011 AT 1322011
(43) Veröffentlichungstag der Anmeldung: 01.08.2012
(73) Patentinhaber: Zortea, Rembert, 6845 Hohenems (AT)
(72) Erfinder: Zortea, Rembert, 6845 Hohenems (AT)
(74) Vertreter: Hofmann, Ralf U.

(56) Entgegenhaltungen:
- DE-A1-102007 009 199
- US-A- 4 522 254
- US-A1- 2008 000 613

## Beschreibung

Die Erfindung bezieht sich auf einen Sammler und Verteiler für eine Heiz- oder Kühlanlage, welcher zumindest zwei Anschlusskammern umfasst, die jeweils mindestens einen Anschluss zum Anschließen einer Leitung zum Zu- oder Abführen von Wärmeträgerflüssigkeit in den bzw. aus dem Sammler und Verteiler aufweisen, wobei zumindest zwischen zwei der Anschlusskammern eine Pufferkammer angeordnet ist, die nur mit den Anschlusskammern kommuniziert, zwischen denen sie angeordnet ist. Weiters bezieht sich die Erfindung auf eine Heiz- oder Kühlanlage mit mindestens einem solchen Sammler und Verteiler.

Bei Heizanlagen, welche Heizkreise mit Wärmequellen und Verbraucherkreise mit Verbrauchern aufweisen, ist es bekannt einen Sammler und Verteiler einzusetzen, an den die Vorlauf- und Rücklaufleitungen der Heizkreise sowie die Vorlauf- und Rücklaufleitungen der Verbraucherkreise angeschlossen sind. Dank solcher bekannten Sammler und Verteiler kann die von der mindestens einen Wärmequelle erzeugte Wärme gleichmäßig verteilt und abgeführt werden, unabhängig von den unterschiedlichen Strömungswiderständen der einzelnen Kreise. Durch den Einsatz eines Sammlers und Verteilers können die Schaltungen und Leitungsführungen solcher Anlagen vereinfacht werden und es werden auch gegenseitige Beeinflussungen der einzelnen Kreise unterbunden, sodass ein solcher behälterartiger Sammler und Verteiler sozusagen den Strömungsnullpunkt innerhalb der Anlage bildet. Dabei können die einzelnen Vorlauf- und Rücklaufleitungen der verschiedenen Kreise ohne Berücksichtigung einer bestimmten Reihenfolge angeschlossen werden, wobei der Sammler und Verteiler wegen seines geringen Volumens an jedem beliebigen Platz eines Heizraumes angebracht werden kann. Analoge Maßnahmen werden auch bei Kühlanlagen angewandt.

Ein Sammler und Verteiler der eingangs genannten Art ist aus der AT 399770 B bekannt. Der Sammler und Verteiler umfasst mindestens zwei Anschlusskammern, welche jeweils in Form von Anschlussstutzen ausgebildete Anschlüsse zum Anschließen der Vorlauf- und Rücklaufleitungen der Heiz- oder Kühlkreise und der Verbraucherkreise aufweisen. Zwischen benachbarten Anschlusskammern sind jeweils zwei Zwischenwände angeordnet, zwischen denen ein Spaltraum liegt, über den die benachbarten Anschlusskammern miteinander verbunden sind. Auf diese Weise gelingt eine gute Trennung der Temperaturniveaus der einzelnen Kammern, wobei auch große Temperaturdifferenzen zwischen Vorlauf- und Rücklaufleitungen erreicht werden können. Damit innerhalb einer jeweiligen Anschlusskammer eine möglichst einheitliche Temperatur vorliegt, sind im Zentrum der Anschlusskammern "Turbulatoren" in Form von Strömungsleitblechen vorgesehen, die für eine Durchmischung der Wärmeträgerflüssigkeit innerhalb einer jeweiligen Anschlusskammer sorgen.

Ein solcher Sammler und Verteiler ersetzt herkömmliche Stangenverteiler, wobei mehr als zwei Temperaturniveaus vorgesehen werden können. In den Heizkreisen einer Heizanlage werden niedrige Rücklauftemperaturen ermöglicht.

Bekannt sind weiters Pufferspeicher zur Speicherung von aufgeheizter bzw. abgekühlter Wärmeträgerflüssigkeit im Rahmen einer Heizungsanlage und/oder Warmwasserversorgung oder im Rahmen einer Kühlanlage. Ein solcher Pufferspeicher dient dazu, Differenzen zwischen erzeugter und verbrauchter Wärmemenge auszugleichen. Mittels eines Pufferspeichers kann beispielsweise über eine Solaranlage gewonnene Wärmeenergie in leistungsstarken Zeiten gespeichert und in leistungs-ärmeren Zeiten wieder abgegeben werden. Bei solchen Pufferspeichern ist es bekannt, diese mittels sogenannter Schichtbleche in verschiedene Zonen zu unterteilen, damit die Temperaturschichtung des Warmwassers im Pufferspeicher unterstützt wird. Ein solcher Pufferspeicher geht beispielsweise aus der EP 2141 433 A2 und der DE 10 2007 009 199 A1 hervor, wobei in der letztgenannten Schrift verschiedene Ausgestaltungen von Schichtblechen und unterschiedliche Möglichkeiten zur Befestigung derselben im Pufferspeicher gezeigt sind. In die einzelnen Zonen können Vorlauf- und Rücklaufleitungen von Heizkreisen und Verbraucherkreisen münden.

Ein Energiespeicher der eingangs genannten Art geht aus US 2008/0000613 A1 hervor. Der für ein Kühlsystem eingesetzte Energiespeicher weist einen oberen Einlassbereich zur Einbringung von Kühlflüssigkeit in die Pufferkammer auf. Die Kühlflüssigkeit wird an einem im Einlassbereich angeordneten Leitblech umgelenkt, um eine Vermischung der neu eingebrachten Kühlflüssigkeit mit bereits vorhandener Kühlflüssigkeit zu verhindern. Das Leitblech ermöglicht auch eine gleichmäßige Verdrängung der bereits in der Anschlusskammer befindlichen Kühlflüssigkeit durch die Durchtrittsöffnungen eines Lochblechs in die Pufferkammer des Energiespeichers. Das Lochblech erstreckt sich, bezogen auf eine horizontale Ebene, über den gesamten Innenquerschnitt des Energiespeichers. An der Austrittsseite des Energiespeichers ist ein analoger Aufbau mit einem Leitblech für aus dem Energiespeicher austretende Kühlflüssigkeit angeordnet.

Aus US 4,522,254 A geht ein in Pufferspeicher mit einer Vielzahl in horizontaler Richtung durch Trennwände abgetrennten Pufferzellen hervor. Die Pufferzellen sind in vertikaler Richtung durch Lochbleche von den direkt angrenzenden Anschlusskammern getrennt, wobei die Wärmeträgerflüssigkeit durch die Durchtrittsöffnungen der Lochbleche hindurchtritt.

Nachteilig bei bekannten Pufferspeichern ist es u.a., dass Temperaturschichtungen trotz des Einsatzes von Schichtblechen oder Lochblechen nicht in gewünschtem Maß erreicht werden und/oder dass im Falle eines Bedarfes an aufgeheizter bzw. abgekühlter Wärmeträgerflüssigkeit durch einen Verbraucher zunächst ein größeres Volumen von Wärmeträgerflüssigkeit aufgeheizt bzw. abgekühlt werden muss, bevor die Wärmeträgerflüssigkeit mit der gewünschten Temperatur zur Verfügung steht.

Aufgabe der Erfindung ist es einen Sammler und Verteiler mit integrierter Pufferkammer der eingangs genannten Art bereitzustellen, bei dem die Temperaturschichtung verbessert ist. Erfindungsgemäß gelingt dies durch einen Sammler und Verteiler mit den Merkmalen des Anspruchs 1.

Eine erfindungsgemäße Heiz- oder Kühlanlage besitzt die Merkmale des Anspruchs 5.

Beim Sammler und Verteiler gemäß der Erfindung ist kommuniziert die mindestens eine Pufferkammer, die zwischen zwei Anschlusskammern angeordnet ist, mit der ersten und der zweiten Anschlusskammer jeweils über einen Spaltraum, der zwischen zwei Zwischenwänden liegt, welche zwischen der Pufferkammer und der jeweiligen benachbarten Anschlusskammer angeordnet sind. Die Pufferkammer kommuniziert auf diese Weise nur mit den beiden Anschlusskammern, zwischen denen sie liegt, und ist ansonsten geschlossen. Die Pufferkammer besitzt also keine Anschlüsse, über die Wärmeträgerflüssigkeit in den Sammler und Verteiler einführbar ist bzw. aus diesem abführbar ist. Die Pufferkammer ist somit ohne Anschlüsse zum Anschließen von Vorlauf- und/oder Rücklaufleitungen von Heiz- oder Kühlkreisen und ohne Anschlüsse zum Anschließen von Vorlauf- und/oder Rücklaufleitungen von Verbrauchern ausgebildet. Diese Vorlauf- und Rückleitungen und Verbraucherkreis-Vorlauf- und Verbraucher-Rücklaufleitungen sind an Anschlüssen von Anschlusskammern anzuschließen.

Auf Grund der anschlusslosen Ausbildung der diesen Puffer ausbildenden Pufferkammer und auf Grund der Verbindung der Pufferkammer mit den benachbar-ten Anschlusskammern über die Spalträume wird ein schichtweises Beladen und Entladen der Pufferkammer ermöglicht. Störungen in der Schichtung der Wärmeträgerflüssigkeit werden hierbei weitestgehend vermieden. Auf diese Weise kann ein höchst effizienter Pufferspeicher sehr einfach in die Heiz- oder Kühlanlage integriert werden.

Weiters kann durch einen erfindungsgemäßen Sammler und Verteiler ermöglicht werden, dass benötigte Wärme bzw. Kälte weitgehend direkt dem mindestens einen Verbraucher zugeführt wird und der von der Pufferkammer ausgebildete Puffer erst bei Vorliegen eines Überschusses beladen wird. Systemträgheiten können dadurch sehr gering gehalten werden.

Wie bereits erwähnt kombiniert ein erfindungsgemäßer Sammler und Verteiler die Sammel- und Verteilfunktion mit einer Pufferfunktion. Die Sammelfunktion besteht darin, dass aus der mindestens einen Vorlaufleitung des mindestens einen Heizkreises und aus der mindestens einen Verbraucher-Rücklaufleitung des mindestens einen Verbraucherkreises austretende Wärmeträgerflüssigkeit gesammelt wird. Die Verteilerfunktion besteht darin, dass Wärmeträgerflüssigkeit an die mindestens eine Rücklaufleitung des mindestens einen Heiz- oder Kühlkreises und an die Verbraucher-Vorlaufleitung des mindestens einen Verbraucherkreises verteilt wird, um in diese jeweilige Leitung einzutreten. Der Austritt der Wärmeträgerflüssigkeit aus der Vorlaufleitung des Heiz- oder Kühlkreises und der Eintritt der Wärmeträgerflüssigkeit in die Rücklaufleitung des Heiz- oder Kühlkreises erfolgt hierbei in unterschiedlichen Anschlusskammern. Ebenso erfolgt der Eintritt der Wärmeträgerflüssigkeit in die Verbraucher-Vorlaufleitung und der Austritt der Wärmeträgerflüssigkeit aus der Ver-braucher-Rücklaufleitung in unterschiedlichen Anschlusskammern.

Eine jeweilige Anschlusskammer weist vorteilhafterweise ein einheitliches Temperaturniveau auf, d.h. die in ihr sich befindende Wärmeträgerflüssigkeit besitzt eine einheitliche Temperatur, wobei die einzelnen Anschlusskammern ein unterschiedliches Temperaturniveau aufweisen, d.h. die Wärmeträgerflüssigkeit in ihnen hat unterschiedliche Temperaturen. Es ist eine der Zahl der gewünschten Temperaturniveaus entsprechende Anzahl von in unterschiedlichen Höhen liegenden Anschlusskammern vorhanden, beispielsweise sind im Falle von zwei gewünschten Temperaturniveaus zwei Anschlusskammern und im Falle von drei gewünschten Temperaturniveaus drei Anschlusskammern usw. vorhanden.

Ein erfindungsgemäßer Sammler und Verteiler kann eine Pufferkammer oder zwei oder mehr Pufferkammern aufweisen, wobei eine jeweilige Pufferkammer zwischen zwei Anschlusskammern liegt und mit der darüber- und der darunterliegenden Anschlusskammer jeweils über einen Spaltraum verbunden ist, der zwischen zwei Zwischenwänden liegt, die zwischen der Pufferkammer und der jeweils benachbarten Anschlusskammer angeordnet sind.

Die Zwischenwände liegen vorzugsweise zumindest im Wesentlichen parallel zueinander. Insbesondere liegen die Zwischenwände, zumindest großteils, in horizontalen Ebenen.

Die Höhe des Spaltraums, der zwischen den beiden Zwischenwänden liegt, ist wesentlich kleiner als die Höhe der Anschlusskammer, welche durch die Zwischenwände von der Pufferkammer getrennt wird. Erfindungsgemäß ist die Höhe des Spaltraums kleiner als ein Zwanzigstel der Höhe dieser Anschlusskammer. Die Höhe des Spaltraums wird hierbei entsprechend der gewünschten Querschnittsfläche des Spaltraums gewählt. Diese beträgt vorteilhafterweise dem Ein- bis Zweifachen der vor Querschnittsfläche der größten an diese Anschlusskammer angeschlossenen Leitung.

Zusätzlich zu Anschlusskammern, zwischen denen eine Pufferkammer liegt, kann ein erfindungsgemäßer Sammler und Verteiler auch zwei oder mehr Anschlusskammem aufweisen, die direkt über einen Spaltraum miteinander verbunden sind, der zwischen zwei Zwischenwänden liegt, die zwischen diesen beiden Anschlusskammern angeordnet sind. Es können also zusätzlich zu "gepufferten" Temperaturniveaus, zwischen denen eine Pufferkammer angeordnet ist, auch "ungepufferte"' Temperaturniveaus, ohne eine solche dazwischen liegende Pufferkammer vorgesehen sein.

Vorteilhafterweise ist das Volumen der Pufferkammer oder einer jeweiligen der Pufferkammern, welche zwischen zwei Anschlusskammern liegt bzw. welche jeweils zwischen zwei Anschlusskammern liegen, größer als das Volumen jeder der beiden benachbarten Anschlusskammern, vorzugsweise mehr als doppelt so groß wie dieses. Bei gleicher Querschnittsfläche ist somit vorteilhafterweise die Höhe der (jeweiligen) Pufferkammer größer als, vorzugsweise mindestens doppelt so groß wie die Höhe der darunterliegenden bzw. darüberliegenden Anschlusskammer.

Weitere Vorteile und Einzelheiten der Erfindung werden im Folgenden anhand der beiliegenden Zeichnung erläutert. In dieser zeigen:
Fig. 1 a eine vereinfachte und schematisierte Darstellung einer Heizanlage mit einem erfindungsgemäßen Sammler und Verteiler (schematisch im Längsmittelschnitt dargestellt);
Fig. 1b eine schematische Querschnittdarstellung des Sammlers und Verteilers (entlang der Linie AA von Fig. 1 a);
Fig. 2 eine schematische Darstellung einer Heizanlage mit einem Sammler und Verteiler gemäß einer zweiten Ausführungsform der Erfindung;
Fig. 3 eine schematische Darstellung einer Kühlanlage mit einem Sammler und Verteiler gemäß einer dritten Ausführungsform der Erfindung;
Fig. 4 eine schematische Darstellung einer Kühlanlage mit einem Sammler und Verteiler gemäß einer vierten Ausführungsform der Erfindung.

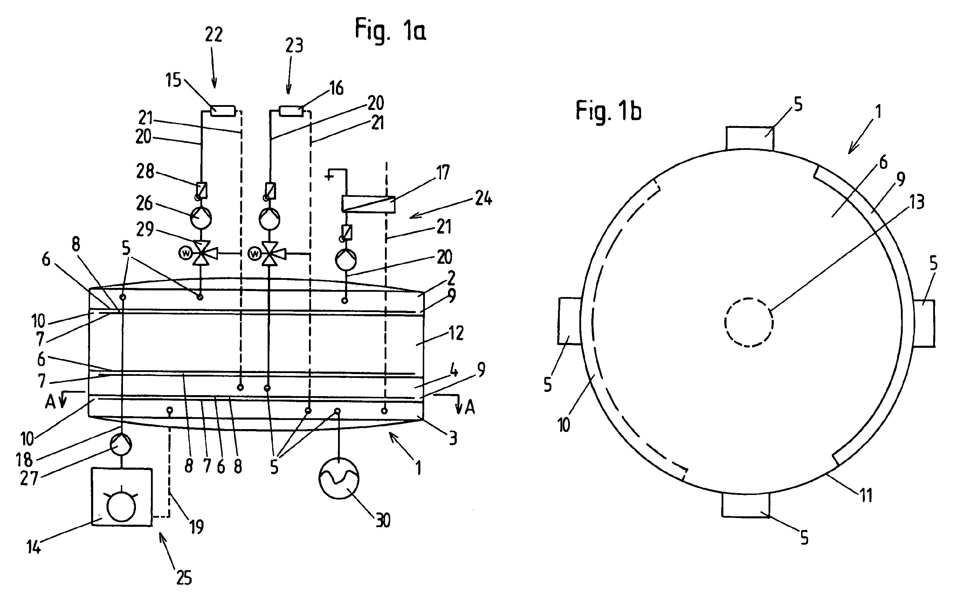

Ein erstes Ausführungsbeispiel der Erfindung wird im Folgenden anhand der Fig. 1 a und 1 b erläutert. Hier erfolgt der Einsatz des Sammlers und Verteilers 1 im Rahmen einer Heizanlage.

Der Sammler und Verteiler 1 umfasst in diesem Ausführungsbeispiel drei übereinanderliegende Anschlusskammern 2, 3 und 4, welche jeweils Anschlüsse 5 für Leitungen aufweisen. Die Anschlüsse 5 können in Form von Anschlussstutzen ausgebildet sein. Beispielsweise ist auch eine Ausbildung in Form von Anschlussöffnungen möglich.

Die am höchsten liegende Anschlusskammer 2 bildet die höchste Temperaturstufe aus, d.h. nimmt Wärmeträgerflüssigkeit auf, die das höchste Temperaturniveau aufweist. Die niedrigste Temperaturstufe wird von der am tiefsten liegenden Anschlusskammer 3 ausgebildet. Die Anschlusskammer 4 bildet eine dazwischen liegende Temperaturstufe aus. Als Wärmeträgermedium wird Wasser, gegebenenfalls mit entsprechenden Zusätzen eingesetzt.

Je nach den Anforderungen des Anwendungsfalls können mehr oder weniger übereinanderliegende Anschlusskammern vorhanden sein, d.h. es können ein oder mehrere weitere Anschlusskammern vorhanden sein, die in der Höhe im Bereich zwischen den Anschlusskammern 2 und 3 liegen und zusätzliche Temperaturstufen ausbilden, oder es könnte die Anschlusskammer 4 entfallen.

Wenn direkt benachbarte Anschlusskammern vorhanden sind (also ohne Zwischenschaltung einer weiter unten genauer erläuterten Pufferkammer), so sind zwischen diesen mindestens zwei Zwischenwände 6, 7 angeordnet, die zwischen sich einen engen Spaltraum 8 begrenzen, über welchen die benachbarten Anschlusskammern 3, 4 kommunizieren. Jede der Zwischenwände 6, 7 weist mindestens eine Eintrittsöffnung 9, 10 in den zwischen den beiden Zwischenwänden 6, 7 liegenden Spaltraum 8 auf. Beispielsweise können die Eintrittsöffnungen 9, 10 wie dargestellt dadurch ausgebildet werden, dass die Zwischenwände 6, 7 bereichsweise im Abstand von der Seitenwand 11 des Sammlers und Verteilers 1 enden.

Im Querschnitt (vgl. Fig. 1b) bzw. Grundriss des Sammlers und Verteilers 1 gesehen überlappen die mindestens eine Eintrittsöffnung 9 und mindestens eine Austrittsöffnung 10 günstigerweise nicht. Vorzugsweise liegen sie im Bereich von gegenüber liegenden Abschnitten der Seitenwand 11. Damit wird der Weg der Wärmeträgerflüssigkeit durch den Spaltraum 8 möglichst lang.

Modifizierte Ausbildungen der Zwischenwände 6, 7 mit dem Spaltraum 8 und den Eintrittsöffnungen 9, 10 sind denkbar und möglich, beispielsweise in der Form wie sie aus dem in der Beschreibungseinleitung genannten gattungsgemäßen Stand der Technik hervorgehen.

Auch zusätzliche Zwischenwände zwischen benachbarten Kammern sind denkbar und möglich, zwischen denen mindestens ein zusätzlicher Spaltraum liegt, der mit dem Spaltraum 8 kommuniziert.

Die Zwischenwände 6, 7 liegen zumindest im Wesentlichen parallel zueinander. Insbesondere liegen die Zwischenwände 6, 7 zumindest im Wesentlichen in horizontalen Ebenen.

Beispielsweise kann der vertikale Abstand zwischen den Zwischenwänden 6, 7 im Bereich von 10mm bis 30mm liegen.

Zwischen den Anschlusskammern 2 und 4 liegt eine Pufferkammer 12. Diese besitzt keine Anschlüsse 5 und kommuniziert ausschließlich mit der darüberliegenden und darunterliegenden Anschlusskammer 2,4. Zu diesem Zweck sind zwischen der Pufferkammer 12 und der Anschlusskammer 2 und zwischen der Pufferkammer 12 und der Anschlusskammer 4 jeweils mindestens zwei Zwischenwände 6, 7 angeordnet, die einen Spaltraum 8 zwischen sich begrenzen, über welchen die Pufferkammer 12 mit den Anschlusskammern 2 und 4 jeweils verbunden ist. Die Zwischenwände zwischen der Pufferkammer 12 und den Anschlusskammern 2, 4 können in gleicher Weise ausgebildet sein wie die zuvor beschriebenen Zwischenwände 6, 7 zwischen benachbarten Anschlusskammern 3,4. Ein Querschnitt durch die Pufferkammer 12 würde dahingehend dem Querschnitt von Fig. 1b entsprechen. Modifikationen gegenüber der Ausbildung von Fig. 1 a und 1 b sind wie oben im Zusammenhang mit den Zwischenwänden zwischen den Anschlusskammern 3, 4 erwähnt wiederum möglich.

Die Pufferkammer 12 bildet eine Pufferfunktion für die darüberliegende Anschlusskammer 2 wie weiter unten noch genauer erläutert wird. Falls für eine konkrete Anwendung auch für die Anschlusskammer 4 eine Pufferfunktion günstig wäre, so könnte auch zwischen den Anschlusskammern 4, 3 eine weitere Pufferkammer 12 vorgesehen werden. Diese wäre in analoger Weise von der darüber- und darunterliegenden Anschlusskammer 4, 3 durch mindestens zwei Zwischenwände 6, 7 abgegrenzt, die einen Spaltraum 8 zwischen sich einschließen, über welchen die Verbindung mit diesen Anschlusskammern 4, 3 erfolgt, wobei die Pufferkammer im Übrigen wieder geschlossen wäre, also keine Anschlüsse 5 aufweisen würde.

Auf diese Weise kann jeder gewünschten Anschlusskammer 2, 4, die oberhalb der untersten Anschlusskammer 3 liegt, eine Pufferfunktion mittels einer Pufferkammer 12 zugeordnet werden, soweit dies zweckmäßig ist.

In den Anschlusskammern 2, 3 und 4 soll eine Durchmischung der Wärmeträgerflüssigkeit erfolgen, sodass die Wärmeträgerflüssigkeit in der ganzen Anschlusskammer 2, 3, 4 möglichst die gleiche Temperatur aufweist. Zu diesem Zweck ist im gezeigten Ausführungsbeispiel in einem zentralen Bereich einer jeweiligen Anschlusskammer 2, 3, 4 ein aus einem Lochblech ausgebildetes Rohr 13 angeordnet (das der Einfachheit halber nur in Fig. 1b dargestellt ist). Dieses wirkt als Turbulator zur Vermischung der Wärmeträgerflüssigkeit bei einer auf dieses Rohr 13 ausgerichteten Strömung durch Austritt von Wärmeträgerflüssigkeit aus einem der angeschlossenen Leitungen. In anderer Form ausgebildete Turbulatoren können vorgesehen sein, beispielsweise in Form von turbinenartig angeordneten Strömungsleitblechen.

Zur Vereinfachung der Konstruktion kann das Rohr 13 auch durch die Pufferkammer 12 durchgeführt werden, auch wenn es dort keine Funktion hat.

In Fig. 1 a ist in stark schematisierter Weise der Einbau des Sammlers und Verteilers 1 in eine Heizanlage dargestellt. Die Heizanlage umfasst im dargestellten Ausführungsbeispiel eine einzige Wärmequelle 14, die hier in Form eines Brennwertkessels ausgebildet ist. Andere und/oder weitere Wärmequellen 14 können vorgesehen sein. Die Heizanlage umfasst im in Fig. 1 a dargestellten Ausführungsbeispiel die Verbraucher 15, 16, 17. Der Verbraucher 15 stellt eine statische Heizung dar, der Verbraucher 16 eine Fußbodenheizung und der Verbraucher 17 einen Wärmetauscher einer Warmwasserbereitung. Andere und/oder mehr oder weniger als drei Verbraucher können vorgesehen sein.

Eine jeweilige Wärmequelle 14 bildet mit ihrer Vorlaufleitung 18 und ihrer Rücklaufleitung 19, die über Anschlüsse 5 an unterschiedliche der Anschlusskammern 2, 3, 4 angeschlossen sind, einen Heizkreis 25. Falls nur eine Wärmequelle 14 vorhanden ist, so ist diese mit ihrer Vorlaufleitung 18 an die höchste Anschlusskammer 2 und mit ihrer Rücklaufleitung 19 an die niedrigste Anschlusskammer 3 angeschlossen. Falls mehrere Wärmequellen 14 vorhanden sind, so ist zumindest eine dieser Wärmequellen mit ihrer Vorlaufleitung 18 an die höchste Anschlusskammer 2 und zumindest eine dieser Wärmequellen mit ihrer Rücklaufleitung 19 an die niedrigste Anschlusskammer 3 angeschlossen.

Die Verbraucher 15, 16, 17 bilden mit ihren Verbraucher-Vorlaufleitungen 20 und ihren Verbraucher-Rücklaufleitungen 21 Verbraucherkreise 22, 23, 24, wobei die Verbraucher-Vorlaufleitung 20 und die Verbraucher-Rücklaufleitung 21 eines jeweiligen Verbraucherkreises 22, 23, 24 über Anschlüsse 5 an unterschiedliche der Anschlusskammern 2, 3, 4 angeschlossen sind.

Die Anschlüsse erfolgen entsprechend den gewünschten und zweckmäßigen Temperaturniveaus. Z.B. beträgt die Temperatur der Wärmeträgerflüssigkeit in der Anschlusskammer 2 75° C, in der Anschlusskammer 4 40° C und in der Anschlusskammer 3 35° C.

Der Transport der Wärmeträgerflüssigkeit durch einen jeweiligen Verbraucherkreis 22, 23, 24 erfolgt mittels einer jeweiligen Umwälzpumpe 26. Der Transport der Wärmeträgerflüssigkeit durch einen jeweiligen Heizkreis 25 erfolgt mittels einer jeweiligen Umwälzpumpe 27 (im Ausführungsbeispiel von Fig. 1 a ist nur ein Heizkreis und entsprechend nur eine Umwälzpumpe 27 vorhanden).

Wenn von der Wärmequelle 14 der Anschlusskammer 2 mehr Wärme zugeführt wird, als von dieser durch die an ihr angeschlossenen Verbraucherkreise 22, 24 entnommen wird, so wird die Pufferkammer 12 von oben nach unten zunehmend mit aufgeheizter Wärmeträgerflüssigkeit beladen, die eine Temperatur entsprechend dem Temperaturniveau der Anschlusskammer 2 aufweist. Es kann dadurch eine ausreichend große Menge von aufgeheizter Wärmeträgerflüssigkeit zur Warmwasserbereitung über den Verbraucherkreis 24 bereitgestellt werden. Die Auslegung und Taktung der Wärmequelle 14 können dadurch optimiert werden. Die Beladung der Pufferkammer 12 erfolgt von oben nach unten geschichtet, d.h. es befinden sich übereinanderliegende Schichten von Wärmeträgerflüssigkeit mit unterschiedlichen Temperaturen. Durch die Zu- und Abfuhr durch die Spalträume 8, wobei keine weiteren Anschlüsse 5 vorhanden sind, wird eine besonders gute und ungestörte Schichtung erreicht.

Die weiters eingesetzten Aggregate, von denen in Fig. 1a Ventile 28, Mischventile 29 und ein Dehngefäß 30 dargestellt sind, entsprechen in ihrem Aufbau und in ihrer Funktion dem Stand der Technik.

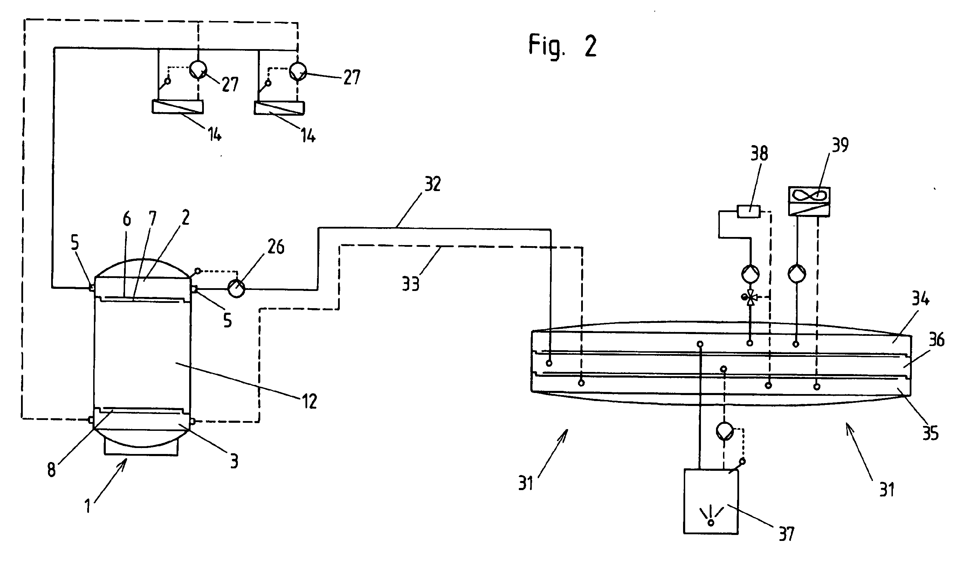

Beim in Fig. 2 dargestellten Ausführungsbeispiel ist ein Sammler und Verteiler 1 eingesetzt, der entsprechend dem in Fig. 1 dargestellten Sammler und Verteiler ausgebildet ist, aber nur zwei Anschlusskammern 2, 3 aufweist, zwischen denen eine Pufferkammer 12 angeordnet ist. Als Wärmequellen 14 sind Wärmetauscher von Wärme-Rückgewinnungen von Kühlanlagen vorhanden. Als Verbraucher ist hier ein zweiter Sammler und Verteiler 31 über eine Verbraucher-Vorlaufleitung 32 und eine Verbraucher-Rücklaufleitung 33 an die Anschlusskammern 2, 3 angeschlossen. Der Sammler und Verteiler 31 ist in herkömmlicher Weise ausgebildet und umfasst die Anschlusskammern 34, 35, 36. An den Sammler und Verteiler 31 ist eine weitere Wärmequelle 37 angeschlossen und sind Verbraucher 38, 39 in Form einer statischen Heizung (=Radiatoren) und einer Lüftung 39 zur Lufterwärmung angeschlossen. Der Anschluss erfolgt in herkömmlicher Weise. Andere und/oder weitere Wärmequellen und/oder Verbraucher können angeschlossen sein. Zusatzaggregate, wie ein Dehngefäß und eine Warmwasseraufbereitung sind der Einfachheit halber in der Darstellung von Fig. 2 weggelassen.

Durch die Pufferkammer 12 kann von den Wärmequellen 14 bereitgestellte Wärme in einfacher und effizienter Weise zwischengespeichert werden. Die Pufferkammer 12 wird hierbei von oben nach unten entsprechend beladen und, so weit erforderlich wieder entladen.

Wenn von den Wärmequellen 14 Wärme bereitgestellt wird, die im System, letztlich von den Verbrauchern 38, 39 benötigt wird, so kann diese weitgehend direkt durch die Anschlusskammer 2 durchgeführt werden. Es kann dadurch eine geringe Trägheit gegenüber der von den Wärmequellen 14 bereitgestellten Wärme erreicht werden. Eine Be- und Entladung der Pufferkammer 12 erfolgt im Wesentlichen nur bei einem Wärmeüberschuss bzw. zusätzlichen Wärmebedarf. Der Steuerungs- bzw. Regelungsaufwand ist hierbei sehr gering. In Fig. 2 sind schematisch Steuerungsleitungen für die mit den Wärmequellen 14 zusammenarbeitenden Umwälzpumpen und für die Umwälzpumpe 26 dargestellt, welche die Wärmeträgerflüssigkeit durch die Verbraucher-Vorlaufleitung 32 und Verbraucher-Rücklaufleitung 33 transportiert.

Eine Modifikation des in Fig. 2 dargestellten Ausführungsbeispiels bestünde darin, dass die Pufferkammer 12 in den Sammler und Verteiler 31 integriert würde, indem diese zwischen den Anschlusskammern 35, 36 angeordnet wird. Der Sammler und Verteiler 1 könnte somit entfallen, wobei der Sammler und Verteiler 31 dann in erfindungsgemäßer Weise ausgebildet ist.

Die Zwischenwände 6, 7 sind in Fig. 2 gegenüber dem in Fig. 1 a und 1b dargestellten Ausführungsbeispiel modifiziert dargestellt (die Eintrittsöffnungen in den Spaltraum schließen nicht direkt an die Seitenwand des Sammlers und Verteilers an). Eine Ausbildung wie in Fig. 1 a und 1 b dargestellt, ist aber ebenso möglich.

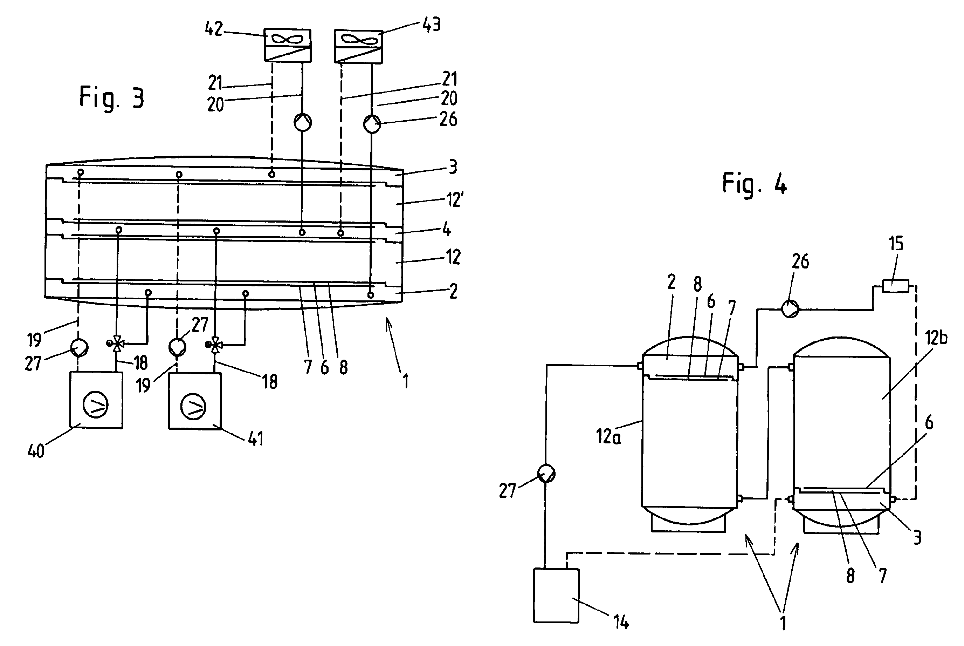

Die Erfindung kann in analoger Weise bei Kühlanlagen eingesetzt werden. Zwei Ausführungsbeispiele für den Einsatz in einer Kühlanlage sind in den Fig. 3 und 4 dargestellt.

Beim Ausführungsbeispiel von Fig. 3 sind zwei Kühlaggregate 40, 41 vorgesehen. Deren Vorlaufleitungen 18 sind über Mischventile an die Anschlusskammern 2, 3 angeschlossen. Deren Rücklaufleitungen 19 sind an die Anschlusskammer 4 angeschlossen. Mehr oder weniger Kühlaggregate 40, 41 können vorgesehen sein. Zumindest eines der Kühlaggregate 40, 41 ist mit seiner Vorlaufleitung 18 an die unterste Anschlusskammer 2 mit der niedrigsten Temperatur angeschlossen. Zumindest ein Kühlaggregat 40,41 ist mit seiner Rücklaufleitung 19 an die oberste Kammer 3 mit dem höchsten Temperaturniveau angeschlossen.

Verbraucher 42, 43, die zum Kühlen dienen, sind mit ihren Verbraucher-Vorlaufleitungen 20 und Verbraucher-Rücklaufleitungen 21 entsprechend den Temperaturbedürfnissen jeweils an unterschiedliche der Anschlusskammern 2, 3, 4 angeschlossen.

Zwischen den Anschlusskammern 2, 4 und zwischen den Anschlusskammern 3, 4 sind in der bereits beschriebenen Weise Pufferkammern 12, 12' angeordnet. Diese können von unten nach oben mit kalter Wärmeträgerflüssigkeit beladen und nach Bedarf wieder entladen werden. Ein erforderliches Takten der Kühlaggregate 40, 41 kann durch die Pufferkammern 12, 12' wesentlich reduziert werden.

Zusatzaggregate, wie ein Dehngefäß, sind der Einfachheit halber weggelassen.

Beispielsweise kann das Temperaturniveau in der Anschlusskammer 2 bei 6° C, das Temperaturniveau in der Anschlusskammer 4 bei 12° C und das Temperaturniveau in der Anschlusskammer 3 bei 18° C liegen.

Wie in Fig. 4 dargestellt ist, kann eine Pufferkammer 12 auch auf zwei Teilkammern 12a, 12b aufgeteilt werden, welche jeweils in unterschiedlichen Behältern 44, 45 angeordnet sind. Beim Ausführungsbeispiel von Fig. 4 ist dies beispielhaft für eine Heizanlage gezeigt. Hierbei ist oberhalb der Teilkammer 12a eine Anschlusskammer 2 angeordnet und unterhalb der Teilkammer 12b ist eine Anschlusskammer 3 angeordnet. Die Teilkammern 12a, 12b sind mit den Anschlusskammern 2, 3 in der bereits beschriebenen Weise über Spalträume 8 verbunden. Das untere Ende der Teilkammer 12a ist mit dem oberen Ende der Teilkammer 12b über eine Verbindungsleitung 46 verbunden. Die Anschlusskammern 2 und 3 weisen wie zuvor beschrieben Anschlüsse 5 auf und sind in der beschriebenen Weise mit Wärmequellen 14 und Verbrauchern 15 verbunden. Weitere Anschlusskammern können vorgesehen sein. Weitere Wärmequellen 14 und/oder Verbraucher 15 können vorgesehen sein. Die von den Teilkammern 12a, 12b gebildete Pufferkammer 12 kommuniziert nur über die Spalträume 8 mit den benachbarten Anschlusskammern 2, 3 und ist im Übrigen geschlossen, d.h. weist selbst keine Anschlüsse 5 auf. Für den Fall, dass weitere Anschlusskammern vorhanden sind, können auch weitere Pufferkammern vorgesehen sein (in analoger Weise wie oben beschrieben).

In analoger Weise kann eine Kühlanlage bzw. ein Sammler und Verteiler für eine Kühlanlage ausgebildet sein.

In diesem Ausführungsbeispiel bilden somit die Behälter 44, 45 zusammen einen erfindungsgemäßen Sammler und Verteiler. Das Puffervolumen kann dadurch vergrößert werden, ohne dass ein zu großer einzelner Behälter vorgesehen werden muss. Dies kann beispielsweise bei beschränkten Raumhöhen von Bedeutung sein. Grundsätzlich könnte den Behältern 44, 45 mindestens ein weiterer Behälter zwischengeschaltet sein, der mindestens eine weitere Teilkammer der Pufferkammer 12 bildet. Die Verbindungsleitungen werden hierbei so gelegt, dass eine jeweilige Pufferkammer von oben nach unten (im Falle einer Heizanlage) bzw. von unten nach oben (im Falle einer Kühlanlage) beladen wird.

Eine Heiz- oder Kühlanlage kann auch mehrere in erfindungsgemäßer Weise ausgebildete Sammler und Verteiler umfassen.

### Legende zu den Hinweisziffern:

| | | | |
|---|---|---|---|
| 1 | Sammler und Verteiler | 23 | Verbraucherkreis |
| 2 | Anschlusskammer | 24 | Verbraucherkreis |
| 3 | Anschlusskammer | 25 | Heizkreis |
| 4 | Anschlusskammer | 26 | Umwälzpumpe |
| 5 | Anschluss | 27 | Umwälzpumpe |
| 6 | Zwischenwand | 28 | Ventil |
| 7 | Zwischenwand | 29 | Mischventil |
| 8 | Spaltraum | 30 | Dehngefäß |
| 9 | Eintrittsöffnung | 31 | Sammler und Verteiler |
| 10 | Eintrittsöffnung | 32 | Verbraucher-Vorlauf leitung |
| 11 | Seitenwand | 33 | Verbraucher-Rücklaufleitung |
| 12, 12' | Pufferkammer | 34 | Anschlusskammer |
| 12a | Teilkammer | 35 | Anschlusskammer |
| 12b | Teilkammer | 36 | Anschlusskammer |
| 13 | Rohr | 37 | Wärmequelle |
| 14 | Wärmequelle | 38 | Verbraucher |
| 15 | Verbraucher | 39 | Verbraucher |
| 16 | Verbraucher | 40 | Kühlaggregat |
| 17 | Verbraucher | 41 | Kühlaggregat |
| 18 | Vorlaufleitung | 42 | Verbraucher |
| 19 | Rücklaufleitung | 43 | Verbraucher |
| 20 | Verbraucher-Vorlaufleitung | 44 | Behälter |
| 21 | Verbraucher-Rücklaufleitung | 45 | Behälter |
| 22 | Verbraucherkreis | 46 | Verbindungsleitung |

## Patentansprüche

1. Sammler und Verteiler für eine Heiz- oder Kühlanlage, welcher zumindest zwei Anschlusskammern (2, 3, 4) umfasst, die jeweils mindestens einen Anschluss (5) zum Anschließen einer Leitung (18,19; 20, 21) zum Zu- oder Abführen von Wärmeträgerflüssigkeit in den bzw. aus dem Sammler und Verteiler aufweisen, wobei zumindest zwischen zwei der Anschlusskammern (2, 3, 4) eine Pufferkammer (12, 12') angeordnet ist, die nur mit den Anschlusskammern (2, 3, 4) kommuniziert, zwischen denen sie angeordnet ist, **dadurch gekennzeichnet, dass** diese Pufferkammer (12, 12') mit diesen beiden Anschlusskammern (2, 3,4) jeweils nur über einen Spaltraum (8) verbunden ist, der zwischen zwei Zwischenwänden (6, 7) liegt, welche zwischen der Pufferkammer (12, 12') und der jeweiligen benachbarten Anschlusskammer (2, 3, 4) angeordnet sind, und ansonsten geschlossen ist, wobei die Höhe des Spaltraums zwischen den beiden Zwischenwänden (6, 7) kleiner als ein Zwanzigstel der Höhe der Anschlusskammer (2, 3, 4) ist, welche durch die Zwischenwände (6, 7) von der Pufferkammer (12, 12') getrennt wird.

2. Sammler und Verteiler nach Anspruch 1, **dadurch gekennzeichnet, dass** das Volumen der Pufferkammer (12, 12') größer als das Volumen einer jeweiligen der Anschlusskammern (2, 3, 4) ist, zwischen denen die Pufferkammer (12, 12') liegt.

3. Sammler und Verteiler nach Anspruch 2, **dadurch gekennzeichnet, dass** das Volumen der Pufferkammer (12, 12') mehr als doppelt so groß ist wie das Volumen der jeweiligen Anschlusskammer (2, 3, 4) ist, zwischen denen die Pufferkammer (12, 12') liegt.

4. Sammler und Verteiler nach einem der Ansprüche 1 bis 3, **dadurch gekennzeichnet, dass** der Sammler und Verteiler mindestens zwei Anschlusskammern (2, 3, 4) aufweist, die über einen Spaltraum (8) verbunden sind, der zwischen zwei Zwischenwänden (6, 7) liegt, welche zwischen den beiden Anschlusskammern (2, 3, 4) angeordnet sind und diese voneinander trennen.

5. Heiz- oder Kühlanlage umfassend mindestens einen eine Vorlaufleitung (18) und eine Rücklaufleitung (19) aufweisenden Heizkreis (25) mit einer Wärmequelle (14) zur Erwärmung einer Wärmeträgerflüssigkeit oder mindestens einen eine Vorlaufleitung (18) und eine Rücklaufleitung (19) aufweisenden Kühlkreis mit einem Kühlaggregat (40, 41) zur Abkühlung einer Wärmeträgerflüssigkeit, mindestens einen eine Verbraucher-Vorlaufleitung (20) und eine Verbraucher-Rücklaufleitung (21) aufweisenden Verbraucherkreis (22, 23, 24) mit mindestens einem Verbraucher (15, 16, 17, 31, 42,43), über den Wärme von der Wärmeträgerflüssigkeit abgebbar oder über den Wärme von der Wärmeträgerflüssigkeit aufnehmbar ist, und mindestens einen Sammler und Verteiler (1), der Anschlusskammern (2, 3,4) mit Anschlüssen (5) aufweist, wobei alle Vorlauf- und Rücklaufleitungen (18, 19) und alle Verbraucher-Vorlauf- und Verbraucher-Rücklaufleitungen (20, 21) an den oder einen der Sammler und Verteiler (1) angeschlossen sind, **dadurch gekennzeichnet, dass** der oder mindestens einer der Sammler und Verteiler (1) nach einem der Ansprüche 1 bis 4 ausgebildet ist.

## Claims

1. Collector and distributor for a heating or cooling assembly which comprises at least two connecting chambers (2, 3, 4) which each have at least one connection (5) for connection of a pipeline (18, 19; 20, 21) for the supply or removal of heat transfer fluid into or out of the collector and distributor, wherein a buffer chamber (12, 12') is arranged at least between two of the connecting chambers (2, 3, 4) which only communicates with the connecting chambers (2, 3, 4) between which it is arranged, **characterised in that** this buffer chamber (12, 12') is only connected with these two connecting chambers (2, 3, 4) in each case via a gap space (8) which lies between two intermediate walls (6, 7) which are arranged between the buffer chamber (12, 12') and the adjacent connecting chamber (2, 3, 4) and is otherwise closed, wherein the height of the gap space between the two intermediate walls (6, 7) is less than one twentieth of the height of the connecting chamber (2, 3, 4) which is divided from the buffer chamber (12, 12') by the intermediate walls (6, 7).

2. Collector and distributor according to claim 1, **characterised in that** the volume of the buffer chamber (12, 12') is greater than the volume of one of the connecting chambers (2, 3, 4) between which the buffer chamber (12, 12') is located.

3. Collector and distributor according to claim 2, **characterised in that** the volume of the buffer chamber (12, 12') is more than twice as large as the volume of the connecting chamber (2, 3, 4) between which the buffer chamber (12, 12') lies.

4. Collector and distributor according to one of the claims 1 to 3, **characterised in that** the collector and distributor has at least two connecting chambers (2, 3, 4) which are conected via a gap space (8) which lies between two intermediate walls (6,7) which are arranged between the two connecting chambers (2, 3, 4) and divide these from one another.

5. Heating or cooling assembly comprising at least one heating circuit (25) having a feed line (18) and a return line (19) with a heat source (14) for heating a heat transfer fluid or at least one cooling circuit having a feed line (18) and a return line (19) with a cooling unit (40, 41) for cooling a heat transfer fluid, at least one consumer circuit (22, 23, 24) having a consumer feed line (20) and a consumer return line (21) with at least one consumer (15, 16, 17, 31, 42, 43) via which heat can be emitted from the heat transfer fluid or via which heat can be absorbed from the heat transfer fluid, and at least one collector and distributor (1) which has connecting chambers (2, 3, 4) with connections (5), wherein all feed and return lines (18, 19) and all consumer feed and consumer return lines (20, 21) are connected to the collector and distributor (1), or one of these, **characterised in that** the collector and distributor (1), or at least one of these, is designed according to one of the claims 1 to 4.

## Revendications

1. Système collecteur et distributeur pour une installation de chauffage ou de refroidissement qui comporte au moins deux chambres de connexion (2, 3, 4) qui comportent chacune au moins une connexion (5) pour permettre le branchement d'une conduite (18, 19, 20, 21) d'alimentation ou d'évacuation d'un fluide caloporteur dans ou hors du système collecteur et distributeur, au moins entre deux des chambres de connexion (2, 3, 4) étant positionnée une chambre tampon (12, 12') qui ne communique qu'avec les chambres de connexion (2, 3, 4) entre lesquelles elle est positionnée,
**caractérisé en ce que**
la chambre tampon (12, 12') n'est respectivement reliée aux deux chambres de connexion (2, 3, 4) que par un espace en forme de fente (8) qui est situé entre deux parois intermédiaires (6, 7) qui sont montées entre la chambre tampon (12, 12') et la chambre de connexion respectivement voisine (2, 3, 4) et est sinon fermée, la hauteur de l'espace en forme de fente entre les deux parois intermédiaires (6, 7) étant inférieur à un vingtième de la hauteur de la chambre de connexion (2, 3, 4) qui est séparée de la chambre tampon (12, 12') par les parois intermédiaires (6, 7).

2. Système collecteur et distributeur conforme à la revendication 1,
**caractérisé en ce que**
le volume de la chambre tampon (12, 12') est supérieur au volume de chacune des chambres de connexion (2, 3, 4) entre lesquelles est positionnée cette chambre tampon (12, 12').

3. Système collecteur et distributeur conforme à la revendication 2,
**caractérisé en ce que**
le volume de la chambre tampon (12, 12') est égal à plus du double du volume de chacune des chambres de connexion (2, 3, 4) entre lesquelles est positionnée cette chambre tampon (12, 12').

4. Système collecteur et distributeur conforme à l'une des revendications 1 à 3,
**caractérisé en ce qu'**
il comporte au moins deux chambres de connexion (2, 3, 4) qui sont reliées par l'intermédiaire d'un espace en forme de fente (8) qui est situé entre deux parois intermédiaires (6, 7) qui sont montées entre les deux chambres de connexion (2, 3, 4) et les séparent l'une de l'autre.

5. Installation de chauffage ou de refroidissement comprenant au moins un circuit de chauffage (25) comprenant une conduite d'alimentation (18) et une conduite de retour (19) et muni d'une source de chaleur (14) pour chauffer un fluide caloporteur ou au moins un circuit de refroidissement comprenant une conduite d'alimentation (18) et une conduite de retour (19) et muni d'une unité de refroidissement (40, 41) pour refroidir un fluide caloporteur, au moins un circuit de consommateur (22, 23, 24) comprenant au moins une conduite d'alimentation de consommateur (20) et une conduite de retour de consommateur (21) et muni d'au moins un consommateur (15, 16, 17, 31, 42, 43) sur lequel de la chaleur peut être dégagée par le fluide caloporteur ou de la chaleur peut être absorbée par le fluide caloporteur, et au moins un système collecteur et distributeur (1) qui comporte des chambres de connexions (2, 3, 4) comprenant des connexions (5), toutes les conduites d'alimentation et de retour (18, 19) et toutes les conduites d'alimentation de consommateur et de retour de consommateur (20, 21) étant branchées sur ce système collecteur et distributeur (1),
**caractérisé en ce que**
le système collecteur et distributeur (1) est réalisé conformément à l'une des revendications 1 à 4.
